# EUROPEAN PATENT APPLICATION

(11) **EP 1 650 639 A2**
(43) Date of publication of application: **26.04.2006**
(21) Application number: 05256546.2
(22) Date of filing: 21.10.2005
(51) Int. Cl.: G06F 3/00

(54) **Application navigation system for portable devices**

(30) Priority: 22.10.2004 GB 0423600
(71) Applicant: Matsushita Electric Industries Co., Ltd., Kadoma-shi, Osaka 571-8501 (JP)
(72) Inventor: Johnson, Paul Alan, Thatcham, Berkshire RG18 3BL (GB)
(74) Representative: Dawson, Elizabeth Ann

(57) **Abstract**

In a hand held data processing device, applications are arranged in a virtual space and a key or keys is dedicated to navigation through the space only, whereby a user can skip from one application to another at any time with a single key press.

## Description

This invention relates to portable electronic devices, particularly portable devices, and in particular, to the ever increasing number of devices which provide a broad and diverse application set as a user-experience. Devices equipped with this invention would offer a rapid, intuitive, and functional user-experience, as user activity is concentrated on the applications themselves, rather than on managing the somewhat artificial complexities of navigating between individual applications.

### Background

The standard method of selecting applications for a hand held electronic device is to access one or more menus, which are usually set out in a tree structure, and presented on a display. As more and more features are being added to portable electronic devices, the corresponding use of extended menus (whether presented in a graphical manner, or as straightforward lists) increasingly causes frustration and annoyance to the user, due to the limitations inherent in a physical screen representation of the tree structure. Furthermore, navigational menu 'trees' are typically hard-coded in each device, and not only force application navigation along a limited number of predefined paths (some of which are likely to be non-intuitive to significant numbers of users), but also require visual (screen) confirmation from the user that the correct navigational path is being followed. Although application navigation on complex devices is a vital part of the device-experience, it follows that navigation via menu trees is not only tedious, restrictive, and potentially unintuitive, but that it is also unnecessarily slow (not least because it requires additional confirmational visual effort), and can therefore easily contribute to a sub-optimal user-experience.

Much work has already been done to simplify the selection of one application from a number of applications available to the user.

Examples of simplified graphical presentations are to be found in the patent publications US6597358 and US6636246. These prior art methods require the user to interact with the display or graphic user interface (GUI).

### Summary of the Invention

The present invention provides a data processing device, preferably hand held, as described in annexed claim 1, as well as a method of operating a data processing device as described in claim 12 and a computer program product as described in claim 21. Preferred features of the invention are described in the subsidiary claims. By having dedicated, rather than dual or multi function, navigation means the user can skip from one application to another with as little as a single key press.

The invention envisages a virtual application space, wherein navigation paths between arbitrary component applications (or, if available, links to applications/content external to the device, but accessible over a device interface) are dynamically constructed by the user through a set of vectors derived from a dedicated user navigation means. The screen window depicts the application at the current viewing position within the virtual application space. By virtual we mean intangible. The virtual space has no physical realisation but serves as a convenient mechanism for ordering applications.

One desired feature is for the positioning of the dedicated user navigation means (such as push buttons) to correspond physically to their most common operations within the virtual space. A preferred solution is to position the navigational means around the perimeter of the screen, such that, for example, a left operation would result in a "leftward move" within the virtual space (i.e. a leftward repositioning of the viewing window), an upwards press would result in an "upwards move", and so on.

A plurality of virtual spaces could be made available to the user with the availability of one space or another being triggered by an event. The "event" could be a time event so as to make one space available during working hours and another during leisure hours. Another alternative is for the 'event' to be geographical, such as arrival in a different country.

Note that in the context of this invention 'application' is to be interpreted broadly as meaning any piece of software capable of performing a function, from the complete operating software for an inbuilt camera for example to the 'reply' application within a messaging function.

In the preferred embodiment, the invention defines a virtual, multi-dimensional application space (a set of N planes, each supporting X x Y positions), which hosts the application set provided by the device. There is no requirement to display a menu tree (or indeed, to indicate the virtual space mechanism with any graphical representation at all) as the invention is based on the established principle that users are generally able to memorize and maintain a virtual space within which an ordered arrangement of applications may be located. However, a graphical representation could be available as a reminder. With this invention, the user can navigate within the virtual application space without reference to a display or menu set. The parameters and content of the virtual space applicable to the device are replicated in the mind of the user, and it is therefore only necessary for the user to enter a sequence of directional vectors (inputs) to obtain access to a required application located within the virtual space. It not only follows, that, over time, the layout of the application space will be sufficiently memorised that navigation between applications is almost 'blind' (i.e. requires little visual screen confirmation), but also that the potential navigational paths are non-restrictive (as they are dynamically constructed through the virtual space by the user).

The above example describes a three-dimensional space. A fourth dimension is possible in which the population of the virtual three dimensional space changes with time.

As noted above, a device may be capable of supporting multiple virtual grid layouts, and there will be a mechanism for activating one or other of the grids, as the user desires. A minimal implementation of the invention requires a single, permanently active, application grid, or other geometrical layout of locations.

In the embodiment of the invention to be described below the navigation means comprise one or more buttons. In a device having a display these may be located around the periphery of the display. There are numerous other possibilities, including the navigation means being part of a touch sensitive screen. Then, navigation "keys" could be located around the periphery of the screen, preferably each "key" corresponding to a direction of movement.

An embodiment of the invention will now be described by way of example only and with reference to the accompanying drawings in which:
Figure 1 illustrates a three dimensional space of the kind that may be implemented in the present invention;
Figure 2 is a perspective view of a mobile telephone as an example of a hand-held device according to the invention;
Figure 3 illustrates the display of the telephone of Figure 2 with associated dedicated navigation keys;
Figure 4 shows a navigation vector constructed through use of the navigation keys;
Figure 5 shows two possible planes of the space of Figure 1 populated with example applications.

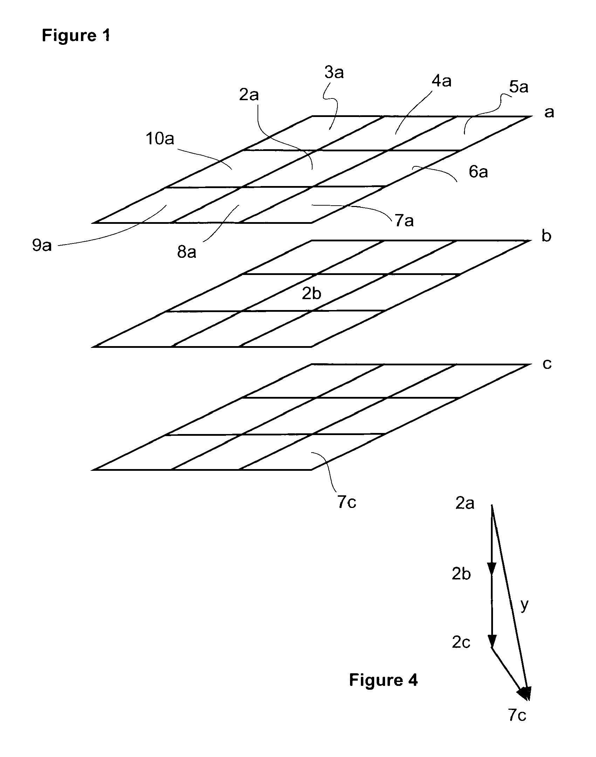

A virtual space suitable for use with the invention is illustrated in figure 1. In this instance, the virtual space comprises three arrays of nine squares. Each of the squares may represent the location of an application, and in this particular instance, the central squares in each layer, conveniently provide a home for idle or transient locations.

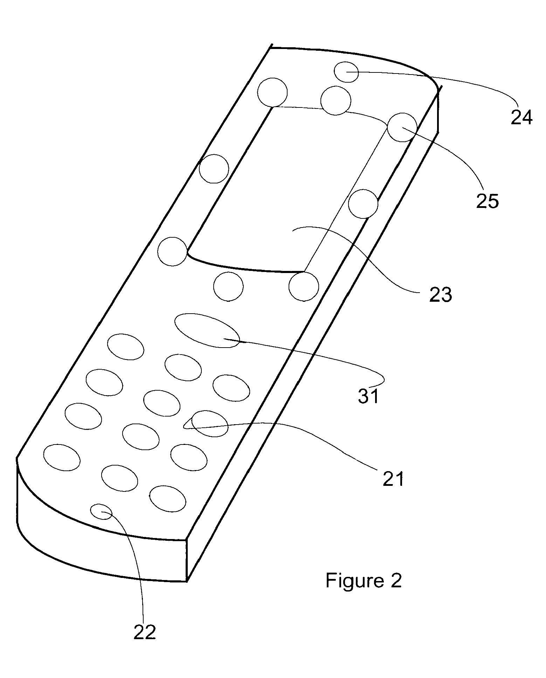

A mobile phone is shown at figure **2**, and has a user interface comprising a keypad **21** for input of data, a microphone **22** for input of voice or other audio signals, a display **23** for viewing data, text or graphics and a loudspeaker 24.

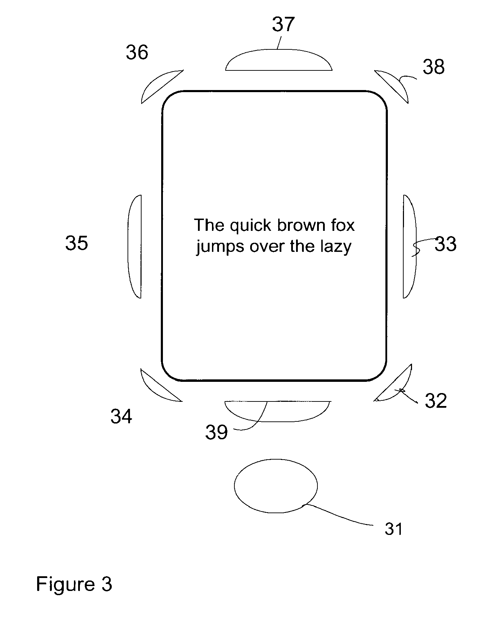

In addition to these standard components, a group of navigational keys **25** is positioned adjacent to the periphery of the display **23**. This group of keys is shown more clearly in the enlarged diagram of figure **3**. All of the keys in the group of keys **25** are directional. When one of the keys is pressed a vector is produced within the virtual space of figure 1. The magnitude of the vector is unity, and the direction of the vector (to be applied to the current virtual application plane) varies from key to key. Key **31** is a bi directional momentary switch, and moves between application planes in the virtual space, therefore a downward operation of key **31** produces a downward direction from plane a to plane **b** and a second downward operation of key **31** produces a downward direction from plane **b** to plane **c**. An upward operation of key **31** would produce an opposing plane vector. The position of the other keys **32-39** determines the vector direction arising from their operation. This is in all cases away from and normal to the edge of the display.

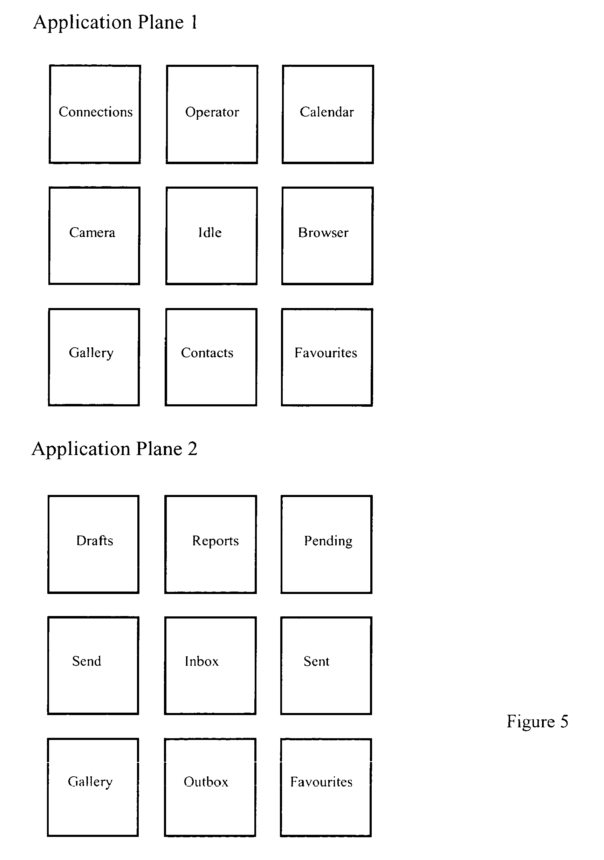

The magnitude of each vector may be regarded as unity because each operation of a key moves the cursor location in the virtual space from one location to an adjacent location. Consider the central square **2a** in the upper array as an idle position and the central squares of the middle layer (**2b**) and the lower layer (**2c**) as transient locations not associated with an application. An application located at **7c** may be accessed as shown in figure 4 as follows:
a first press of key **31** produces the vector from **2a** to **2b**, a second press of key **31** produces the vector from **2b** to **2c** and a press of key **32** produces the vector from **2c** to **7c**. The three vectors from **2a** to **7c** add to produce vector **y**.

As a navigation convenience, it is appropriate to allow a fast method of navigating to a known point in the virtual space, typically (but not necessarily) a central, idle point, or the default device application screen. This method would produce a 'reset vector', regardless of the current position of the viewing window within the virtual application space, and could, for example, be implemented from (but is not limited to) an 'extended' press on key **31**.

Vector spaces suitable for use with the invention are not restricted to access through the Cartesian coordinate system and may for example be accessed using polar coordinates.

### Virtual Grid Customisation.

To further facilitate the process of learning/remembering the grid layout, the application space may be personalised according to the subset of applications most often referenced by a particular user (which will typically differ considerably between users). Thus, the application space may be dynamically populated by the user, minimising application navigation effort, and further improving the user-experience.

The application at the current viewing position within the active virtual grid (or the active grid itself) could be changed by (but is not limited to in mechanism) a dedicated 'grid selection' key on the device. All 'grid selection' key activations would require additional user confirmation, to avoid undefined handset behaviour resulting from accidental/involuntary key presses. A short (standard) press of this key would switch between active grid layouts (should multiple layouts have been defined by the user). A long press of this key (1 second or so) would offer a standard menu selection of all the available device applications for the current grid position within the active virtual space. Selecting any application would replace the application at the viewing position within the active grid. A very long key press (3 seconds or so) would offer a standard menu for the creation of a new virtual grid, populated initially either with empty applications, or from the currently active grid layout. This menu would also offer any event based customisation options (if any) the device could offer for each newly defined grid. Revisions to the virtual grid layout made in this way would automatically be stored by the device.

It should be noted that the invention assumes no limitation on the number of positions each application can occupy within the virtual space, and a user may therefore configure a virtual layout, with one (or several) applications occupying the same position(s) on multiple application planes. Furthermore, as noted above, the contents of a virtual space may be event-dependant - a user could populate a number of virtual spaces, for example, against time events, where different application arrangements would then apply for working hours and evenings/weekends.

### Navigation Feedback.

Where the device implementing this invention has audible or tactile feedback, this invention allows for a further improvement in navigation: the virtual navigation facility for such devices should be offered optionally without wraparound, i.e. application navigation beyond the limits of the virtual space would be prevented. When non-wraparound navigation is selected, and an attempt is made to navigate beyond the virtual space, the device should indicate this in an audible/tactile manner. This facility allows for completely 'blind', i.e. non-screen dependant navigation, as the user can 'feel' the limits of the virtual grid and position the viewing window accordingly. Since this is without reference to the actual viewing window (and therefore no visual effort is required), navigation time between applications will be even further enhanced.

### Separation of Navigation & Application Usage.

Through the use of a dedicated set of application navigation keys, this invention separates the act of navigating between applications from the act of using the applications themselves. As these two very different activities are not duplicated on a single set of keys (as is typically the case currently on small devices), the potential contextual complexity of each key stroke is reduced, and application navigation is unlikely to occur inadvertently.

### Application State Control.

This invention does not require any particular life-cycle for the underlying applications, but assumes that this will be defined by the software layers (or Operating System) beneath it. Where the underlying operating system is fully multi-tasking, it is envisaged that navigation between active applications in a virtual space leaves each application in the state in which it was last used, thus providing an additional benefit: with dedicated navigation keys, ***it is possible to navigate, in an extremely timely and intuitive manner, between arbitrary applications, from any context whatsoever within each application*.** Where the underlying operating system is single tasking, it as assumed that each application must perform any required exiting functions (which may require further user interaction, dependant upon the application context) as the application navigation keys are processed.

### Context Sensitive Navigation.

A basic adoption of this invention for any particular device may not require significant coding changes, as there is no mandated graphical representation of the virtual space (other than the applications screens themselves). Furthermore, as this invention encompasses navigation *between* applications only, individual applications may work without modification, utilising the devices native UI as appropriate, typically including menus / forms / soft keys etc. In fact, since movement around the virtual application space is not context sensitive when managed via the navigation keys, it remains a requirement that applications provide context sensitive menus as appropriate. The Messaging application, for example, will typically offer 'Reply', 'Delete' and/or 'Message Detail' options from a native UI menu when a message is open on screen. Selecting the 'Reply' option, for example, would prepopulate a 'Send' message template with the appropriate details, and perform an automatic grid navigation to the 'Send Message' application. A specific example is described below.

Consider the two example application planes shown in Figure 5 which have been populated with specific applications.

On power up (or after a reset vector command is initiated) the handset will default to the central application in Application Plane 1, the idle screen.

Suppose that an SMS message is received by the handset, which the user wishes to read immediately. A single downward press on key **31** will be sufficient to move to Application Plane 2 from the idle screen on Application Plane 1, and the messaging Inbox will be displayed, as this is the application that corresponds to the central position on Application Plane 2.

Should the user wish to reply to this SMS (a context sensitive operation), this option must be selected from the native menus offered by the messaging application itself. When the 'Reply' option is selected, the handset prepopulates a 'Send Message' template with the appropriate details from displayed message, and performs an automatic grid navigation to reach the 'Send Message' application. Whilst replying, the user wishes to reread the previous SMS - a simple press of key **33** will return to the Inbox display. Finalising the composition by pressing key **35** once more, the response is sent.

Suppose the user now wishes to take a picture - only a single upward press of key **31** is required to activate the camera, and the desired image may then be captured. To browse the mobile web after taking a picture, the user merely presses key **39** once and the browser becomes active.

The above example shows the possibility of navigation through the virtual space being driven by the device operating software, as when navigating from Inbox to Send. Navigation through the space is not exclusively performed by operation of the dedicated keys.

Navigation to a particular application may simultaneously (or after a confirmatory delay) operate its function. For example an image may be captured automatically if the camera function is visited for more than, say, half a second.

It will be appreciated by those skilled in the art that the additional user operable means dedicated solely to navigation around the virtual space are not restricted to keys as shown in the examples and may be implemented in a variety of ways limited only by the appended claims.

## Claims

1. A data processing device capable of supporting a plurality of applications and having user-operable means for controlling operation of the applications, in which the applications are arranged at respective locations in a virtual space and the device comprises additional user operable means dedicated solely to navigation around the virtual space whereby the user can navigate from one application to another at any time without a visual representation of the space on the device.

2. A device as claimed in claim 1 in which physical operations of the additional user operable means correspond to virtual operations in the virtual space.

3. A device as claimed in claim 1 or 2 in which the device includes a visual display and the additional user operable means include a plurality of means located around the periphery of the display.

4. A device as claimed in claim 1, 2 or 3 in which the applications are arranged in rows and columns.

5. A device as claimed in any preceding claim in which the space is three dimensional.

6. A device as claimed in any preceding claim arranged to enable the user to select the applications to be located in the space.

7. A device as claimed in claim 6 in which the geometrical configuration of the space is determined and the user is able to select applications to populate predetermined locations in the space.

8. A device as claimed in any preceding claim in which a plurality of virtual spaces are available to the user.

9. A device as claimed in claim 8 in which only one virtual space is available to the user at any time.

10. A device as claimed in claim 9 in which the availability of one virtual space or another is determined by an event.

11. A device as claimed in any preceding claim in which a plurality of the applications remain active as the user navigates from one to another.

12. A method of operating a hand-held data processing device capable of supporting a plurality of applications and having user-operable means for navigating between applications, the method comprising:
locating applications relative to each other in a virtual space and dedicating user operable means only to navigation around the space whereby to enable the user to navigate between applications at any time without a visual representation of the space on the device.

13. A method as claimed in claim 12 in which the applications are arranged in rows and columns.

14. A method as claimed in claim 12 or 13 in which the space is three dimensional.

15. A method as claimed in claim 12, 13 or 14 including enabling the user to select the applications to be located in the space.

16. A method as claimed in claim 15 in which the geometrical configuration of the space is predetermined and the user is able to select applications to populate predetermined locations in the space.

17. A method as claimed in claim 15 or 16 in which a plurality of virtual spaces are available to the user.

18. A method as claimed in claim 17, in which only one virtual space is available to the user at any time.

19. A method as claimed in claim 18 in which the time during which each space is available is selectable by the user.

20. A method as claimed in any preceding claim in which a plurality of the applications remain active as the user navigates from one to another.

21. A computer program product for use in a hand-held data processing device capable of supporting a plurality of applications, the program enabling the definition of a virtual space in which applications are located relative to each other, and the dedication of certain user operable means only to navigation around the space, whereby to enable the user to navigate from one application to another at any time without a visual representation of the space on the device.

22. A data processing device as claimed in any of claims 1 to 11 being of a suitable size to be held in the hand.
